# EUROPÄISCHE PATENTSCHRIFT

(11) **EP 3 259 993 B1**
(45) Veröffentlichungstag und Bekanntmachung des Hinweises auf die Patenterteilung: **23.01.2019**
(21) Anmeldenummer: 17175523.4
(22) Anmeldetag: 12.06.2017
(51) Int. Cl.: A21C 5/08

(54) **VORRICHTUNG ZUM PORTIONIEREN VON TEIGMASSE**
DEVICE FOR PORTIONING DOUGH
DISPOSITIF DE MISE EN PORTION DE PÂTE

(30) Priorität: 21.06.2016 DE 102016111311
(43) Veröffentlichungstag der Anmeldung: 27.12.2017
(73) Patentinhaber: Fritsch GmbH, 97348 Markt Einersheim (DE)
(72) Erfinder: Bernhardt, Udo, 97346 Iphofen (DE)
(74) Vertreter: Hafner & Kohl

(56) Entgegenhaltungen:
- EP-A1- 0 466 519
- EP-A1- 0 744 126
- EP-A1- 1 174 032
- EP-A1- 2 103 218
- EP-A2- 0 285 442
- WO-A2-2007/083070
- DE-A1-102010 002 689
- DE-B- 1 241 771
- DE-T2- 69 005 742
- US-A- 4 457 771
- US-A- 5 200 203

## Beschreibung

Die Erfindung betrifft eine Vorrichtung zum Portionieren von Teigmasse mit einem Gehäuse zur Aufnahme der zu portionierenden Teigmasse, indem ein Teigzuführungs- und ein Teigtrennbereich angeordnet sind. Im unteren Bereich des Gehäuses oder unter dem Gehäuse ist ein Teigabführungsbereich angeordnet, durch welchen aus der Teigmasse abgesonderte Teigportionen z.B. über eine Fördereinrichtung weiteren Teigverarbeitungsstationen zugeführt werden können.

In dem Teigtrennbereich wird der zugführte, zu portionierende Bereich durch wenigstens ein Teigtrennelement beaufschlagt.

Im Weiteren betrifft die Erfindung auch ein Verfahren zum Positionieren von Teigmasse. Als Stand der Technik sind sogenannte Sternwalzenportionierer bekannt, dies sind Teigportionierer, die im Innenbereich eines Teigtrennbereiches im Querschnitt sternartige gegenseitig rotierende Messerelemente aufweisen, die in Teigtrennstellung mit ihren Schneiden aufeinander zuweisen. Diese sternartigen Messerelemente sind gegenläufig motorisch angetrieben und ziehen einen z.B. von oben zugeführten Teig durch die Messeranordnung nach unten und werfen ihn portionsweise geteilt auf eine Abführvorrichtung aus.

Derartige Sternwalzenportionierer haben sich zwar bewährt, weisen aber dennoch einige Nachteile auf. So entstehen ungleichmäßige Teigportionen in Form und Gewicht durch unterschiedliches Nachfließverhalten bedingt durch unterschiedliche Teigqualitäten und Füllstandhöhen, außerdem ist der Querschnitt der abgesonderten Teigportionen nicht optimal geformt, sondern zwangsläufig durch die umlaufenden Sternwalzenmesser vorgegeben.

DE 12 41 771 B1 offenbart eine Maschine zum gewichtsgleichen Teilen teigiger Massen, insbesondere Teigteilmaschine für Bäckereien.

Aus EP 0 466 519 B1 ist darüber hinaus ein Verfahren zum kontinuierlichen Teilen von Teig bekannt, bei welchem unter einem Fördertrichter zwei gegenläufig angetriebene Messer horizontal in die nach unten aus dem Trichter austretende Teigmasse einfahrbar sind, um diese zu portionieren. Der Antrieb der Teigtrennelemente beim Stand der Technik ist gegenläufig und auf eine Ebene (Schneidebene) beschränkt.

Der Erfindung liegt die Aufgabe zugrunde, eine Vorrichtung mit den Merkmalen des Oberbegriffes des Anspruches 1 derart auszubilden, dass gleichmäßige Teigportionen in Form und Gewicht erzeugt werden können, eine Komprimierung des Teiges gezielt einstellbar ist, abgesonderte Teigportionen einen weitgehend rechteckigen Querschnitt aufweisen können, der für eine Weiterbehandlung gut geeignet ist und weiche und angegarte Teige so getrennt werden können, dass keine oder nur geringe Druckbelastung auf den Teig erfolgt, die einem Entgasen des Teiges entgegenwirken. Diese Aufgabe wird durch die kennzeichnenden Merkmale des Anspruches 1 gelöst, vorteilhafte Weiterbildungen ergeben sich aus den Unteransprüchen 2 - 14. Ansprüche 15 und 16 beschreiben noch ein vorteilhaftes Verfahren zur Portionierung von Teigmasse unter Verwendung einer Portioniervorrichtung der Ansprüche 1 - 14.

Als Kern der Erfindung wird es angesehen, das wenigstens eine Teigtrennelement als in den Teigtrennbereich einschiebbares und verschwenkbar gelagertes Messerelement auszubilden. Das Messerelement wird in den Teigtrennbereich wie das Messer einer "Guillotine" eingeschoben und führt damit zu einem sauberen drucklosen Schnitt, wobei ein einstellbarer Druck erzeugt werden kann, weil das oder die Teigtrennelement(e) vorzugweise rechtwinklig zu ihrer Einführungsrichtung in den Schacht verschwenkbar gelagert sind. Die Schwenkbewegung führt zu einer dosierbaren Druckbelastung auf den abgetrennten Teigbereich, wobei ein Teigentgasungsvorgang gezielt gesteuert werden kann, sofern dieser gewünscht ist. Das Einschieben des oder der Messerelemente in den Innenbereich kann - je nach Verlauf des Teigtrennbereiches, von der Seite her erfolgen, wenn der Innenbereich als vertikal verlaufender Schacht ausgebildet ist.

Das wenigstens eine Teigtrennelement kann von einem Außenbereich in den schachtartigen Innenbereich des Teigtrennbereiches eingeschoben werden. Wenn an dieser Stelle von "schachtartig" gesprochen wird, dann bedeutet es nicht notwendigerweise, dass der Schacht vertikal verlaufen muss, auch schräge Anordnungen des Schachtes sind möglich. Vorteilhafterweise werden zwei sich gegenüberliegende und aufeinander zustellbare Teigtrennelemente in den Schacht eingeführt. Zur Komprimierung der Teigmasse sind die Teigtrennelemente verschwenkbar gelagert, d.h. sie sind in einer schlitzartigen Aufnahme einer Schachtwandung geführt und im Außenbereich zusätzlich zur Einschiebebewegung verschwenkbar angetrieben. Dies bedeutet, dass die Teigtrennelemente im Innenbereich eine Schwenkbewegung durchführen. Die Antriebsbewegung der Teigtrennelemente zur Ausführung der Trenn- und oder Schwenkbewegung kann vorteilhafterweise simultan erfolgen, weil dann die im Innenbereich liegenden Messerkanten z.B. in einer geschlossenen Stellung in Richtung eines Abführbereiches weggeschwenkt werden können, ohne das eine Beschädigung der Messer durch gegenseitiges Anstoßen zu befürchten ist. Es ist aber auch möglich, die Bewegung der beiden Teigtrennelemente gesondert zu steuern. Zur Vergrößerung des Kompressions- oder Auswurfhubes ist es vorteilhaft, wenn die Teigtrennelemente schräg z.B. schräg nach oben weisend in einen vertikalen Schacht eines Teigtrennbereiches eingeführt werden. Aus dieser schräg nach oben weisenden Stellung kann dann eine Verschwenkung der Messerkanten nach unten erfolgen, was zu einer deutlichen Kompression der Teigmassen führt. Um einen Gegendruck aufzubauen ist dabei vorteilhafterweise in einem Bodenbereich des Teigtrennbereiches ein Bodenelement angeordnet, das zwischen einer Verschluss- und einer Ausgabestellung verfahren werden kann.

Es liegt im Rahmen der Erfindung, die Teigtrennelemente mit unterschiedlichen Winkeln in den Teigtrennbereich einzufahren, um dadurch mehr oder weniger Teigmasse einer abzusondernden Teigportion zuzuordnen.

Das Bodenelement kann z.B. entweder als Klappe ausgebildet sein, denkbar ist aber auch ein Schieber oder ein Abzugsförderband, das eine besonders teigschonende Bewegung im Bodenbereich des Schachtes zulässt.

Um die Teigzuführung in die Vorrichtung sicher zu stellen und zu steuern, ist im Teigzuführungsbereich im Wesentlichen horizontal oder flach verlaufendes Förderband vorgesehen, durch welches Teigmasse im Wesentlichen in den nach unten weisenden schachtartigen Trennbereich gefördert werden kann. Die Teigzuführförderbewegung des Förderbandes kann auf einfache Weise durch einen Füllstandsensor gesteuert werden, der über dem Teigtrennbereich angeordnet ist.

Die Erfindung ist anhand von Ausführungsbeispielen von in den Zeichnungsfiguren näher erläutert. Diese zeigen:
- Fig. 1: eine schematisierte Schnittdarstellung des Teigzuführ- und Teigtrennbereiches der Vorrichtung, wobei zwei Trennelemente in einer ersten Einschubposition dargestellt sind;
- Fig. 2: eine Darstellung gemäß Fig. 1, bei welcher die Teigtrennelemente in eine Teigtrennstellung aufeinander zugeführt und nach unten zur Kompression des Teiges verschwenkt sind;
- Fig. 3: eine um 90° verschwenkte Schnittdarstellung der Vorrichtung gemäß Fig. 2;
- Fig. 4: eine um ein Abführförderband ergänzte Darstellung gemäß Fig. 3, bei welcher ein im Bodenbereich des Teigtrennbereiches angeordnetes Abzugsförderband bereits eine teilweise Öffnungsbewegung vollzogen hat, um die abgetrennte Teigmasse auf das Abführförderband freizugeben;
- Fig. 5: eine modifizierte Ausführungsform einer Vorrichtung mit einem ein horizontales Förderband aufweisenden Teigzuführungsbereich;

Die in den Zeichnungsfiguren dargestellte Vorrichtung 1 umfasst ein Gehäuse 2 zur Aufnahme der zu portionierenden Teigmasse 3, wobei in dem Gehäuse 2 ein Teigzuführungsbereich 4 und ein Teigtrennbereich 5 angeordnet sind. Im Bodenbereich des 6 des Teigtrennbereiches 5 ist ein Bodenelement 7 angeordnet, das als Abzugsförderband ausgebildet ist.

Im Teigtrennbereich 5 sind Teigtrennelemente wirksam, um die Teigmasse zu portionieren. Nach der Erfindung sind zwei Teigtrennelemente 8a/8b vorgesehen, die als in den Teigtrennbereich 5 einschiebbare Messerelemente 9a/9b ausgebildet sind und sich gegenüberliegen. Durch die gegenüberliegende Anordnung dieser nach Art von rechteckigen Messerschiebern ausgebildeten Teigtrennelementen können in hervorragender Weise auch die Ecken der den Teigtrennbereich 5 bildenden Kammer erreicht werden, sodass eine Trennung des Teiges über den gesamten Kammerquerschnitt erfolgt.

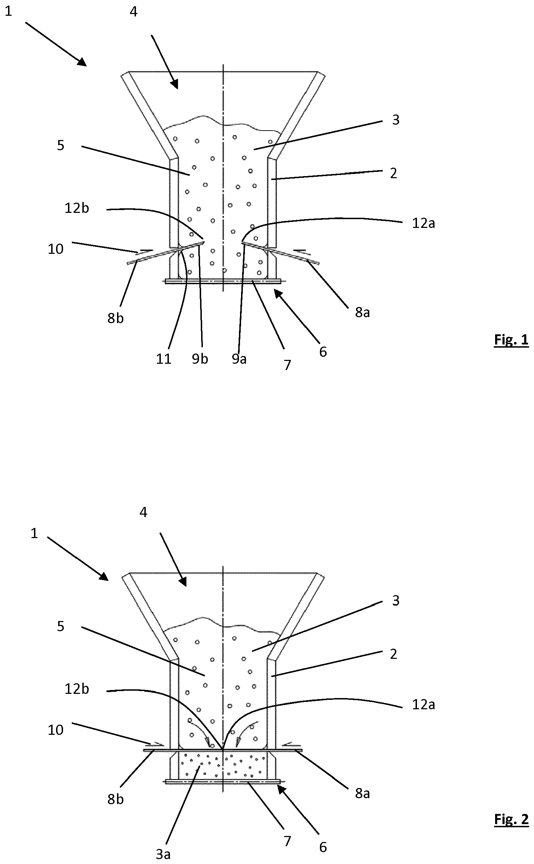

Die Teigtrennelemente 8a/8b werden im Wesentlichen von der Außenseite des Teigtrennbereiches 5 in den Teigtrennbereich eingeführt und sind im Gehäusebereich gelagert. Sie können im Wesentlichen rechtwinklig zu ihrer Einschubrichtung 10 verschwenkt werden, d.h. um eine Schwenkachse, die durch ein seitliches Führungselement 11 in Form eines Führungsschlitzes gebildet wird. In Fig. 2 ist dargestellt, dass die zunächst schräg nach oben in Fig. 1 eingeführten Teigtrennelemente 8a und 8b in einer Teigtrennstellung in einem miteinander fluchtende Horizontalstellung verbracht sind, wodurch die abgetrennte Teigportion 3a unter den Teigtrennelementen 8 komprimiert ist, was durch die Punktstruktur der Teigmasse 3a angedeutet ist. In der in Fig. 2 dargestellte Teigtrennstellung liegen die Teigtrennelemente 8a/8b mit ihren Schneidkanten 12a/12b aneinander.

Es liegt im Rahmen der Erfindung, die Teigtrennelemente 8a/8b aus dünnem Federstahl auszubilden, sodass sie eine gewisse Elastizität aufweisen, d.h.
sich mit ihren aufeinander zuweisenden Kanten bei der Verschwenkbewegung etwas nach oben weg biegen, um die Teigmasse 3 möglichst schonend zu behandeln. Im Rahmen der Erfindung können auch "harte" Teigtrennelemente ohne flexible Ausbildung eingesetzt werden. Weiterhin liegt es im Rahmen der Erfindung, die Schneidkanten 18 nicht rechtwinklig zur Einschubrichtung 10 der Teigtrennelement 8a/8b anzuordnen, sondern schräg gestellt dazu, so wie dies bei dem Fallmesser einer klassischen Guillotine ist. Dadurch ergibt sich in der Teigmasse 3 ein eher ziehender Schnitt, was wiederrum der Entlastung der Teigmasse 3 im Schnittbereich zugute kommt.

Die z.B. lineare Trenn- bzw. Einschubbewegung der Trennelemente 8a/8b und/oder die Schwenkbewegung wird durch einen simultanen Antrieb für beide Teigtrennelemente 8a/8b vollzogen, der aus Vereinfachungsgründen nicht näher dargestellt ist. Für den Fachmann ist es geläufig, hydraulische, pneumatische oder rein mechanische, z.B. kulissengesteuerte Antriebsführungen vorzusehen, die eine überlagerte lineare Zustell- und Schwenkbewegung herbeiführen können.

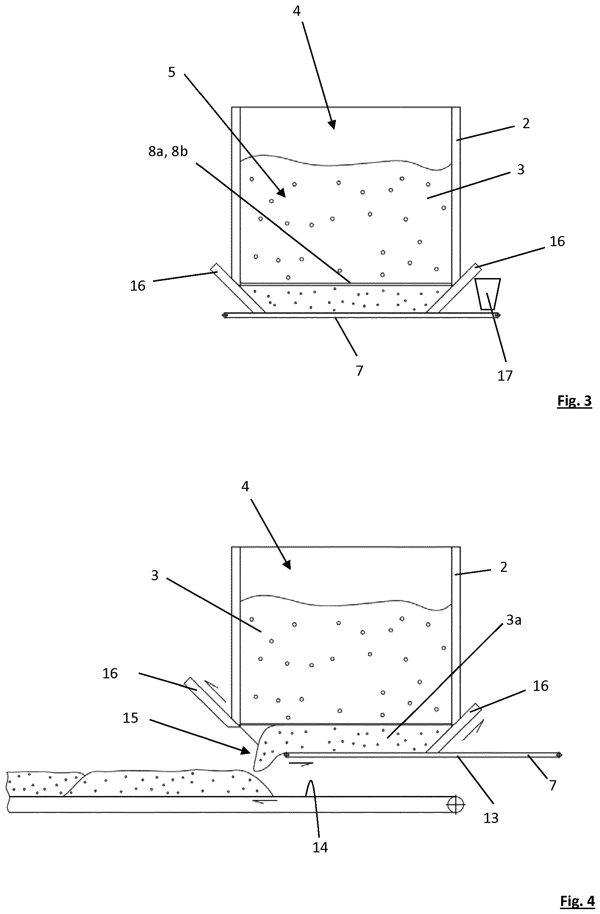

Das in den Zeichnungsfiguren dargestellte Bodenelement 7 sorgt bei der Kompressions- bzw. Schwenkbewegung der beiden Teigtrennelemente 8a/8b für einen Gegendruck und kann nach Abschluss der Kompressionsbewegung abgezogen werden, was sich deutlich aus Fig. 4 ergibt, dort ist das Bodenelement 7 als Abzugsförderband 13 ausgebildet. Die portionierte Teigmasse 3a wird dann freigegeben und auf ein Abführförderband 14 eines Teigabführbereiches 15 freigegeben. Seitliche Begrenzungsschieber 16, die die Kammer des Teigtrennbereiches 5 im Bereich unterhalb der Trennelemente 8a/8b seitlich begrenzen, können ganz oder teilweise dazu geöffnet werden.

Ein Mehler 17 dient zum Auftrag von Mehl auf dem Abzugsförderband.

Aus den Zeichnungsfiguren ergibt sich ferner, dass die Schneidkanten 18 der Teigtrennelemente 8a/8b Schneidkantenflankenbereiche 19 aufweisen, die ineinander angrenzende Teigtrennstellung gemäß Fig. 2 aneinander liegen. Dies bedeutet, dass ein Flankenbereich 19a schräg nach unten und der gegenüberliegende Flankenbereich 19b schräg nach oben weist. In geschlossener Stellung ist dann ein Aneinanderlegen oder eine Berührung dieser Flankenbereiche möglich, um eine möglichst durchgehende Messerfläche für die Teigmasse 3 zu bilden.

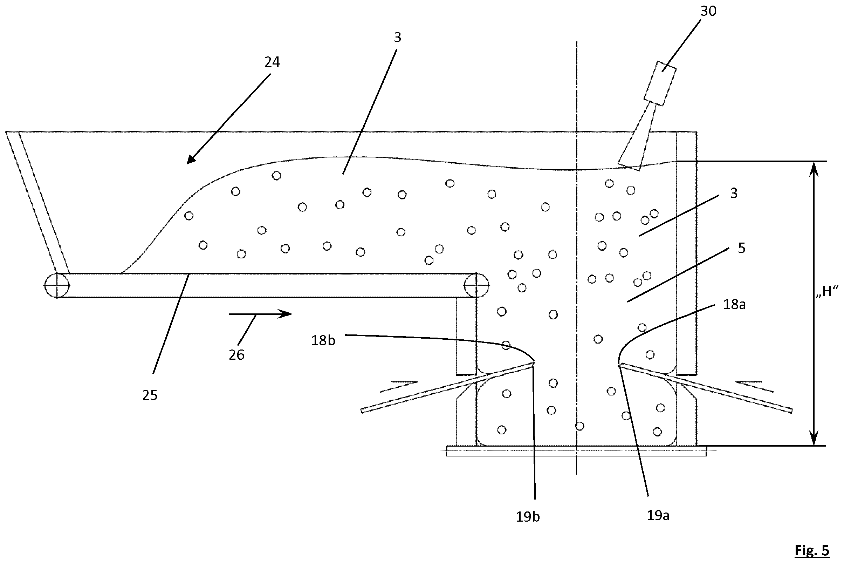

Bei dem in Fig. 5 dargestellten Ausführungsbeispiels ist der Teigzuführungsbereich 24 gegenüber dem Teigzuführungsbereich 4 der Fig. 1 - 4 modifiziert. Der Teigzuführungsbereich 24 in Fig. 5 umfasst ein horizontal verlaufendes Förderelement in Form eines Förderbandes 25, das in Zuführrichtung 26 angetrieben ist, um die Teigmasse 3 in die Kammer des Teigtrennbereiches 5 zu fördern. Der Füllstand H wird dabei über einen Sensor 30 überwacht. Die Füllstandhöhe wird vorzugsweise gleichgehalten, die Teigportion, die unten abgeteilt wird, wird nachgefüllt, sobald der Füllstand H abgesunken ist. Dazu wird das Förderband 25 wieder angetrieben, um Teigmasse 3 nachzufüllen. Sehr deutlich sind in Zeichnungsfiguren 5 auch die Schneidkanten 18 a/b mit den sich gegenüber liegenden Schneidkantenflankenbereichen 19 a/b ersichtlich.

### BEZUGSZEICHENLISTE

- 1: Vorrichtung
- 2: Gehäuse
- 3: Teigmasse
- 4: Teigzuführungsbereich
- 5: Teigtrennbereich
- 6: Bodenbereich
- 7: Bodenelement
- 8: Teigtrennelemente a, b
- 9: einschiebbare Messerelemente a, b
- 10: Einschubrichtung
- 11: seitliches Führungselement
- 12: Schneidkanten a, b
- 13: Abzugsförderband
- 14: Abführförderband
- 15: Teigabführbereiches
- 16: Begrenzungsschieber
- 17: Mehler
- 18: Schneidkanten
- 19: Schneidkantenflankenbereiche a, b

- 24: Teigzuführungsbereich
- 25: Förderband
- 26: Zuführrichtung

- 30: Sensor

## Patentansprüche

1. Vorrichtung (1) zum Portionieren von Teigmasse (3), mit
- einem Gehäuse (2) zur Aufnahme der zu portionierenden Teigmasse (3);
- einem in diesem Gehäuse (2) angeordneten Teigzuführungs- (4) und Teigtrennbereich (5), wobei
- in oder an dem Teigtrennbereich (5) wenigstens ein bewegbares Teigtrennelement (8a, 8b) vorgesehen ist, das als in den Teigtrennbereich (5) einschiebbares Messerelement (9a/9b) ausgebildet ist, sowie
- unter dem Teigtrennbereich (5) ein Teigabführungsbereich (15) angeordnet ist, durch welchen aus der Teigmasse (3) abgesonderte Teigportionen weiteren Teigverarbeitungsstationen zuführbar sind, **dadurch gekennzeichnet, dass** das wenigstens eine Teigtrennelement (8a, 8b) verschwenkbar gelagert ist, wobei
das wenigstens eine Teigtrennelement (8a, 8b) in einer schlitzartigen Aufnahme einer Schachtwandung geführt und im Außenbereich zusätzlich zur Einschiebebewegung verschwenkbar angetrieben ist.

2. Vorrichtung (1) nach Anspruch 1, **dadurch gekennzeichnet, dass** das wenigstens eine Teigtrennelement (8a, 8b) ein von einem Außenbereich in einen schachtartigen Innenbereich des Teigtrennbereiches (5) einschiebbares, an seiner Stirnseite mit einer Schneidkante (12a/12b; 18a, 18b) versehenes Messerelement (9a/9b) ausgebildet ist und die Schwenkachse im Bereich von (einer) Schachtwandung(en) angeordnet sind (ist).

3. Vorrichtung (1) nach Anspruch 1 oder 2, **dadurch gekennzeichnet, dass** in dem Teigtrennbereich (5) zwei sich gegenüberliegende und aufeinander zuführbare Teigtrennelemente (8a, 8b) angeordnet sind.

4. Vorrichtung (1) nach Anspruch 1 bis 3, **dadurch gekennzeichnet, dass** die Teigtrennelemente (8a, 8b) rechtwinkelig zu ihrer Einführungsrichtung verschwenkbar gelagert sind.

5. Vorrichtung (1) nach einem der vorhergehenden Ansprüche, **dadurch gekennzeichnet, dass** die Teigtrennelemente (8a, 8b) in einer zusammengeführten Teigtrennstellung mit ihren Schneidkanten (18) aneinander angrenzen.

6. Vorrichtung (1) nach einem der vorhergehenden Ansprüche, **dadurch gekennzeichnet, dass** die Teigtrennelemente (8a, 8b) in seitlichen Führungselementen (11) des den Teigtrennbereich (5) aufnehmenden Gehäuseabschnittes gelagert sind.

7. Vorrichtung (1) nach einem der vorhergehenden Ansprüche, **dadurch gekennzeichnet, dass** die beiden sich gegenüberliegenden Teigtrennelemente (8a, 8b) zur Ausführung ihrer Trenn- und/oder Schwenkbewegung simultan antreibbar sind.

8. Vorrichtung (1) nach einem der vorhergehenden Ansprüche, **dadurch gekennzeichnet, dass** die aneinander angeordneten und/oder aufeinander zuweisenden inneren Enden der Teigtrennelemente (8a, 8b) in Richtung des Teigabführbereiches (15) verschwenkbar antreibbar sind.

9. Vorrichtung (1) nach einem der vorhergehenden Ansprüche, **dadurch gekennzeichnet, dass** die Teigtrennelemente (8a, 8b) schräg nach oben weisend in den Teigtrennbereich (5) einführbar sind.

10. Vorrichtung nach einem der vorhergehenden Ansprüche, **dadurch gekennzeichnet, dass** in einem Bodenbereich (6) des Teigtrennbereiches (5) ein Bodenelement (7) angeordnet ist, das zwischen einer Verschluss- und einer Ausgabestellung verfahrbar ist.

11. Vorrichtung (1) nach einem der vorhergehenden Ansprüche, **dadurch gekennzeichnet, dass** das Bodenelement (7) als Abzugsförderband (13) ausgebildet ist.

12. Vorrichtung (1) nach einem der vorhergehenden Ansprüche, **dadurch gekennzeichnet, dass** der Teigzuführungsbereich (4) ein im Wesentlichen horizontal oder flach verlaufendes Förderelement (25) umfasst, durch welches Teigmasse (3) in den im Wesentlichen nach unten weisenden schachtartigen Teigtrennbereich (5) förderbar ist.

13. Vorrichtung (1) nach Anspruch 12, **dadurch gekennzeichnet, dass** über dem Teigtrennbereich (5) ein Füllstandssensor (30) angeordnet ist, durch welchen eine Teigzuführförderbewegung des Förderelementes (25) des Teigzuführungsbereiches (4) steuerbar ist.

14. Verfahren (1) zum Portionieren von Teigmasse (3), mit folgenden Merkmalen:
- Vorsehen einer Portioniervorrichtung (1) mit einem Gehäuse (2) zur Aufnahme der zu portionierenden Teigmasse (3), in welchem ein Teigzuführungs- (4) und ein Teigtrennbereich (5) und unter welchem ein Teigabführungsbereich (15) angeordnet sind;
- Einfüllen der Teigmasse (3) in die Portioniervorrichtung (1) und Füllen des Teigtrennbereiches (5) mit der Teigmasse (3);
- seitliches Einschieben wenigstens eines in einer schlitzartigen Aufnahme einer Schachtwandung geführten und im Außenbereich zusätzlich zur Einschiebebewegung verschwenkbar angetriebenen Teigtrennelementes (8a, 8b) in den Teigtrennbereich (5) zum Absondern eines Teigabschnittes aus der Teigmasse (3);
- Kompression des abgesonderten Teigabschnittes durch Verschwenken des oder der Teigtrennelemente (8a, 8b) im Innenbereich des Teigtrennbereiches (5) in Richtung eines den Teigtrennbereich (5) nach unten abschließenden Bodenelementes (7);
- Öffnen des Bodenelementes (7) und Freigabe des abgesonderten und komprimierten Teigabschnittes in den Teigabführungsbereich (15).

15. Verfahren nach Anspruch 14, **dadurch gekennzeichnet, dass** die Kompression des abgesonderten Teigabschnittes durch Veränderung eines einstellbaren, offenen Spaltes zwischen den Schneidkanten (12a, 12b; 18a, 18b) der Teigtrennelemente (8a, 8b) und/oder den Schwenkwinkel der Teigtrennelemente (8a, 8b) verändert wird.

## Claims

1. A device (1) for portioning dough (3), having
- a housing (2) for accommodating the dough (3) to be portioned;
- a dough feed area (4) and dough separating area (5) situated in this housing (2), wherein
- at least one movable dough separating element (8a, 8b), designed as a blade element (9a/9b) that is insertable into the dough separating area (5), is provided in or on the dough separating area (5), and
- a dough discharge area (15) that is situated below the dough separating area (5), by means of which dough portions that are separated from the dough (3) are suppliable to further dough processing stations, **characterized in that** the at least one dough separating element (8a, 8b) is pivotably supported, wherein
the at least one dough separating element (8a, 8b) is guided in a slotted receptacle in a shaft wall, and in the outer area is pivotably driven in addition to the insertion movement.

2. The device (1) according to Claim 1, **characterized in that** the at least one dough separating element (8a, 8b) is designed as a blade element (9a/9b) that is provided with a cutting edge (12a/12b; 18a, 18b) on its end face and that is insertable from an outer area into a shaft-like inner area of the dough separating area (5), and the pivot axis is situated in the area of a shaft wall or walls.

3. The device (1) according to Claim 1 or 2, **characterized in that** two dough separating elements (8a, 8b) that are oppositely situated and movable toward one another are situated in the dough separating area (5).

4. The device (1) according to Claims 1 to 3, **characterized in that** the dough separating elements (8a, 8b) are pivotably supported at right angles to their insertion direction.

5. The device (1) according to one of the preceding claims, **characterized in that** the dough separating elements (8a, 8b) adjoin one another with their cutting edges (18) when brought together in a dough separating position.

6. The device (1) according to one of the preceding claims, **characterized in that** the dough separating elements (8a, 8b) are supported in lateral guide elements (11) of the housing section that accommodates the dough separating area (5).

7. The device (1) according to one of the preceding claims, **characterized in that** the two oppositely situated dough separating elements (8a, 8b) are simultaneously drivable for carrying out their separating and/or pivoting movement.

8. The device (1) according to one of the preceding claims, **characterized in that** the adjoining and/or mutually facing inner ends of the dough separating elements (8a, 8b) are pivotably drivable in the direction of the dough discharge area (15).

9. The device (1) according to one of the preceding claims, **characterized in that** the dough separating elements (8a, 8b) are obliquely upwardly insertable into the dough separating area (5).

10. The device according to one of the preceding claims, **characterized in that** a base element (7) that is movable between a closed position and an output position is situated in a base area (6) of the dough separating area (5).

11. The device (1) according to one of the preceding claims, **characterized in that** the base element (7) is designed as a discharge conveyor belt (13).

12. The device (1) according to one of the preceding claims, **characterized in that** the dough feed area (4) includes an essentially horizontally or flatly extending conveying element (25) by means of which dough (3) is conveyable into the essentially downwardly pointing, shaft-like dough separating area (5).

13. The device (1) according to Claim 12, **characterized in that** a filling level sensor (30) by means of which a dough feed conveyor movement of the conveying element (25) of the dough feed area (4) is controllable is situated above the dough separating area (5).

14. A method (1) for portioning dough (3), having the following features:
- providing a portioning device (1) having a housing (2) for accommodating the dough (3) to be portioned, a dough feed area (4) and a dough separating area (5) and a dough discharge area (15) therebeneath being situated in the housing;
- loading the dough (3) into the portioning device (1) and filling the dough separating area (5) with the dough (3);
- laterally inserting at least one dough separating element (8a, 8b), which is guided in a slotted receptacle in a shaft wall and pivotably driven in addition to the insertion movement, into the dough separating area (5) in order to separate a dough portion from the dough (3);
- compressing the separated dough portion by pivoting the dough separating element(s) (8a, 8b) in the inner area of the dough separating area (5), in the direction of a base element (7) that closes off the dough separating area (5) at the bottom;
- opening the base element (7) and releasing the separated, compressed dough portion into the dough discharge area (15).

15. The method according to Claim 14, **characterized in that** the compression of the separated dough portion is altered by changing an adjustable open gap between the cutting edges (12a, 12b; 18a, 18b) of the dough separating elements (8a, 8b) and/or the pivot angle of the dough separating elements (8a, 8b).

## Revendications

1. Dispositif (1) de mise en portions d'une masse de pâte (3), comprenant
- un carter (2) pour recevoir la masse de pâte (3) à mettre en portions ;
- une zone de fourniture de pâte (4) et de séparation de pâte (5) disposée dans ledit carter, dans lequel
- dans ou sur la zone de séparation de pâte (5) est prévu au moins un élément de séparation de pâte mobile (8a, 8b) réalisé sous la forme d'un élément de lame (9a/9b) pouvant être inséré dans la zone de séparation de pâte (5), et
- sous la zone de séparation de pâte (5) est disposée une zone d'évacuation de pâte (15) par laquelle des portions de pâte séparées de la masse de pâte (3) peuvent être fournies à d'autres stations de transformation de la pâte,
**caractérisé en ce que** ledit au moins un élément de séparation de pâte (8a, 8b) est monté pivotant, dans lequel
ledit au moins un élément de séparation de pâte (8a, 8b) est guidé dans un logement en forme de fente d'une paroi de puits et entraîné en pivotement à l'extérieur en plus du mouvement d'insertion.

2. Dispositif (1) selon la revendication 1, **caractérisé en ce que** ledit au moins un élément de séparation de pâte est réalisé sous la forme d'un élément de lame (9a/9b) pouvant être inséré depuis une zone extérieure dans une zone intérieure de type puits de la zone de séparation de pâte (5), et muni sur sa face avant d'un bord tranchant (12a/12b ; 18a, 18b), et l'axe de pivotement est disposé au niveau d'une ou de plusieurs parois de puits.

3. Dispositif (1) selon les revendications 1 ou 2, **caractérisé en ce que** dans la zone de séparation de pâte (5) sont disposés deux éléments de séparation de pâte (8a, 8b) opposés et pouvant être rapprochés l'un de l'autre.

4. Dispositif (1) selon les revendications 1 à 3, **caractérisé en ce que** les éléments de séparation de pâte (8a, 8b) sont montés pivotants perpendiculairement au sens d'insertion.

5. Dispositif (1) selon l'une quelconque des revendications précédentes, **caractérisé en ce que**, dans une position de séparation de pâte rapprochée, les éléments de séparation de pâte (8a, 8b) sont adjacents l'un à l'autre par leurs bords tranchants (18).

6. Dispositif (1) selon l'une quelconque des revendications précédentes, **caractérisé en ce que** les éléments de séparation de pâte (8a, 8b) sont montés dans des éléments de guidage (11) latéraux de la partie de carter logeant la zone de séparation de pâte (5).

7. Dispositif (1) selon l'une quelconque des revendications précédentes, **caractérisé en ce que** les deux éléments de séparation de pâte (8a, 8b) opposés peuvent être entraînés simultanément pour effectuer le mouvement de séparation et/ou de pivotement.

8. Dispositif (1) selon l'une quelconque des revendications précédentes, **caractérisé en ce que** les extrémités intérieures des éléments de séparation de pâte (8a, 8b), disposées côte à côte et/ou tournées l'une vers l'autre, peuvent être entraînées en pivotement vers la zone d'évacuation de pâte (15).

9. Dispositif (1) selon l'une quelconque des revendications précédentes, **caractérisé en ce que** les éléments de séparation de pâte (8a, 8b) peuvent être insérés dans la zone de séparation de pâte (5) en étant dirigés en oblique vers le haut.

10. Dispositif selon l'une quelconque des revendications précédentes, **caractérisé en ce que** dans une zone de fond (6) de la zone de séparation de pâte (5) est disposé un élément de fond (7) déplaçable entre une position de fermeture et une position de sortie.

11. Dispositif (1) selon l'une quelconque des revendications précédentes, **caractérisé en ce que** l'élément de fond (7) est réalisé sous la forme d'une bande transporteuse d'enlèvement (13).

12. Dispositif (1) selon l'une quelconque des revendications précédentes, **caractérisé en ce que** la zone de fourniture de pâte (4) comprend un élément de transport (25) s'étendant de manière substantiellement horizontale et plane et par lequel la masse de pâte (3) peut être transportée dans la zone de séparation de pâte (5) de type puits, tournée substantiellement vers le bas.

13. Dispositif (1) selon la revendication 12, **caractérisé en ce qu'**au-dessus de la zone de séparation de pâte (5) est disposé un capteur de niveau (30) qui permet de commander un mouvement de transport de fourniture de pâte de l'élément de transport (25) de la zone de fourniture de pâte (4) .

14. Procédé (1) de mise en portions d'une masse de pâte (3), présentant les caractéristiques suivantes :
- prévoir un dispositif de mise en portions (1) avec un carter (2) pour recevoir la masse de pâte (3) à mettre en portions, dans lequel est disposée une zone de fourniture de pâte (4) et de séparation de pâte (5) et sous lequel est disposée une zone d'évacuation de pâte (15) ;
- verser la masse de pâte (3) dans le dispositif de mise en portions (1) et remplir la zone de séparation de pâte (5) avec la masse de pâte (3) ;
- insérer latéralement au moins un élément de séparation de pâte (8a, 8b), guidé dans un logement de type fente d'une paroi de puits et entraîné en pivotement à l'extérieur en plus du mouvement d'insertion, dans la zone de séparation de pâte (5) pour séparer une partie de pâte de la masse de pâte (3) ;
- comprimer la partie de pâte séparée par le pivotement de l'élément ou des éléments de séparation de pâte (8a, 8b) à l'intérieur de la zone de séparation de pâte (5) vers un élément de fond (7) terminant la zone de séparation de pâte (5) vers le bas ;
- ouvrir l'élément de fond (7) et libérer la partie de pâte séparée et comprimée dans la zone d'évacuation de pâte (15) .

15. Procédé selon la revendication 14, **caractérisé en ce que** la compression de la partie de pâte séparée est modifiée en modifiant une fente ouverte et réglable entre les bords tranchants (12a, 12b ; 18a, 18b) des éléments de séparation de pâte (8a, 8b) et/ou l'angle de pivotement des éléments de séparation de pâte (8a, 8b).
